# EUROPEAN PATENT SPECIFICATION

(11) **EP 0 931 593 B1**
(45) Date of publication and mention of the grant of the patent: **30.07.2003**
(21) Application number: 99100829.3
(22) Date of filing: 18.01.1999
(51) Int. Cl.: B03C 1/00, B03C 1/015, B03C 1/025, C02F 1/48

(54) **Waste solid treatment apparatus**
Vorrichtung zur Behandlung von festem Abfall
Dispositif pour le traitement des déchets solides

(30) Priority: 23.01.1998 JP 1100598
(43) Date of publication of application: 28.07.1999
(73) Proprietor: Hitachi, Ltd., Chiyoda-ku, Tokyo 101 (JP)
(72) Inventor: Saho, Norihide, Tsuchiura-shi, Ibaraki-ken (JP); Isogami, Hisashi, Ushiku-shi, Ibaraki-ken (JP); Morita, Minoru, Niihani-gun, Ibaraki-ken (JP)
(74) Representative: Finck, Dieter, Dr.Ing.

(56) References cited:
- WO-A-98/47822
- DE-A- 19 637 711
- US-A- 3 803 033
- US-A- 4 193 866
- US-A- 4 294 705
- US-A- 5 360 553

## Description

The invention relates to an apparatus for treating a waste solid which exits from a purification device and which includes magnetic flocks consisting of magnetic substances and solid waste components, wherein the apparatus comprises means for heating the waste solid to a high temperature.

The invention relates particularly to a waste solid treatment apparatus capable of efficiently separating, dehydrating and drying waste solid including ferromagnetic seeds which are brought about from a purification apparatus by magnetic separation.

In the past numerous systems have been proposed for removing insoluble suspended waste solids from polluted liquids by adding thereto a magnetic component suspendible therein producing a dense flocculated mixture. For example, U.S. 4,193,866 discloses a method for the purification of aqueous polluted liquid containing suspended particulate impurities by adding to the liquid an aqueous flocculating solution comprising an aqueous solution of poly-ethyleneimine for co-flocculating the particulate suspended impurities and a magnetic powder and producing a dense flocculated mixture, which settles rapidly in a matter of minutes. Settling can be substantially speeded up by application of magnetic field to the resulting flocculated mixture and magnetically settling the mixture for example by use of magnetic filters. The resulting sludge is strained and the ferrite powder can be generated by bioregeneration or incineration.

U.S. 3,803,033 discloses a process of the generic kind for the removal of organic contaminants from a fluid stream containing organic contaminants. The process involves dispersing a magnetically susceptible iron-carbon complex in the fluid stream, maintaining the magnetically susceptible iron-carbon complex in a disposed condition until a substantial amount of contaminants have been adsorbed from the fluid stream, and passing the magnetically susceptible iron-carbon complex containing dispersion through a magnetic filter to separate the dispersion into a fluid stream having a reduced concentration of contaminants and adsorbed complex containing contaminants. Regeneration of the adsorbed complex may be accomplished by heating the complex in an inert atmosphere at a temperature sufficient to desorb and vaporize the contaminants. However, according to this matter only contaminants and activated complex can be removed, which are able to vaporize.

U.S. 5,360,553 describes a thermal depolymerization processor for converting a process material into other useful products comprising means for mixing a process material with a process liquid and forming a emulsion of slurry. Means is provided for pressuring and heating the slurry, and the slurry is then fed to means for quickly reducing the pressure to a relatively low value and further increasing the temperature. The rapid drop in pressure and increase in temperature causes components of the slurry to convert to volatile gases and separate from the remainder of the slurry which is removed from the processor in the form of solids. The gas is fed to one or more condensers which separate the gas into useful liquids such as various grades of oil.

There has been known an apparatus described in JP-A-59-371 as an apparatus of continuously purifying water to be treated from sea, lake, river or a reservoir by applying solid/liquid separation art by magnetic separation. This is a purification apparatus by a magnetic separation device using a high gradient magnetic filter. According to the apparatus, as a pretreatment prior to a step of magnetically separating raw water to be subjected to water treatment, after intaking raw water, the raw water is agitated by adding thereto, for example, ferromagnetic seeds of triiron tetroxide, polyaluminum sulfate or polyaluminum chloride as a flocculant to thereby bring about a number of magnetic coagulants (magnetic flocks) having a magnetism, that is, magnetic substance in a colloidal form from suspended solids, phytoplanktons, fungi and microorganisms in the raw water by the flocculant. These magnetic substances are drawn to a magnetic filter when they pass through a magnetic separating unit of the purification apparatus and is separated from the raw water.

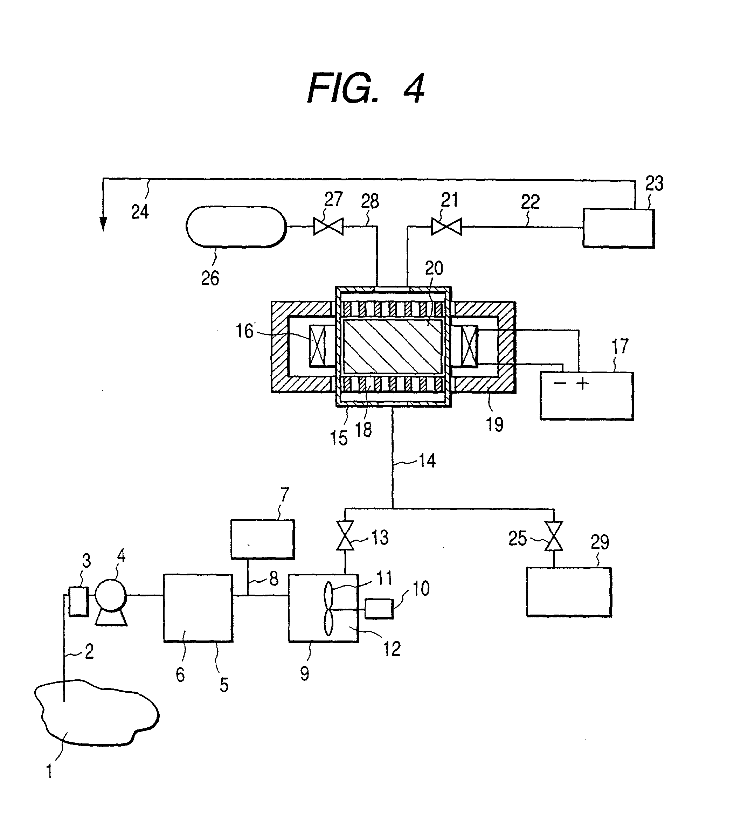

Fig. 4 shows a basic flow of a purification apparatus by magnetic separation.

Raw water in a reservoir 1 is temporarily stored from a conducting tube 2 to a raw water storing tank 5 by a pump 4 via a filter 3 for taking large waste. Ferromagnetic seeds of triiron tetroxide and a flocculant of polyaluminum chloride, polyferric sulphate and high molecular polymer are added from a chemical adjusting device 7 to raw water 6 in the raw water storing tank 5 via a conducting pipe 8, the raw water is agitated by an agitator 11 rotated by a motor 10 in an agitating tank 9 and pretreated water 12 including magnetic substances of magnetic flocks is produced. The pretreated water 12 is made to flow into a magnetic separation vessel 15 via a valve 13 and a conducting tube 14.

Direct current power source is flowed from a direct current power source 17 to an air-core coil 16. A magnetic field in proportion to the direct current is generated in the magnetic separation vessel 15 having a cylindrical shape and the magnetic field is made uniform by a porous magnetic pole 18 for conducting water. Further, the magnetic field is surrounded by a yoke 19 and the yoke 19 prevents leakage as a passage of magnetic force lines. A magnetic filters matrix in a matrix shape at a high gradient magnetic filter 20 is magnetized by the magnetic field which is made uniform. A disturbance is caused in the magnetic field at inside of the magnetic separation vessel 15 by the article charged with the magnetized magnetic filters, coarse and dense portions are produced locally in magnetic fluxes and a number of portions constituting high magnetic gradient are produced. When the pretreated water 12 including the magnetic flocks is delivered from a lower side in an upward flow, the magnetic flocks in the raw water are caught by surfaces of the magnetic filters constituting the charged article and the purified raw water passes through a valve 21 and a conducting tube 22 as treated water, temporarily stored in a treated water tank 23 and returned to the reservoir 1 via a conducting tube 24.

When a constant amount of the magnetic flocks are caught by the high gradient magnetic filter 20, backwashing of the filter is needed to recover the function of the magnetic separation. In the backwashing operation, firstly, the valve 13 is closed and delivery of the pretreated water 12 is stopped. Next, the direct current power source is cut, the magnetic field is nullified, thereafter, a predetermined amount of the treated water from the treated water tank 23 is flowed back from an upper portion of the high gradient magnetic filter 20 via the valve 21 and a valve 25 is opened. At this occasion, air is supplied from an air tank 26 to the magnetic separation unit via a valve 27 and a conducting pipe 28 and the magnetic flocks adhered to the surfaces of the magnetic filters are washed to remove while carrying out air bubbling and wash water is stored in a backwash-treated water tank 29.

The wash water is conducted from the backwash-treated water tank 29 to a mechanical agitator where the magnetic flocks are crushed, the ferromagnetic seeds are separated from the flocks and the ferromagnetic seeds are recovered through ferromagnetic seeds recovering machine, that is, an electromagnetic separator. Thereafter, the moisture is removed as less as possible by a centrifugal separator or a sheet press pre-dryer, conveyed out after lowering the moisture content, dumped to a reclamation site or incinerated. The recovered ferromagnetic seeds are used again.

An explanation will be given of other method of treating the wash water. The wash water from the backwash-treated water tank 29 is removed of the moisture as less as possible by a centrifugal separator or a sheet press pre-dryer, conveyed out after lowering the moisture content and is incinerated in an incinerating furnace. The ferromagnetic seeds are recovered from the incineration ash by an electromagnetic separator using a magnet and thereafter, the ash is dumped to a reclamation site.

Further, after the wash water has been recovered to the backwash-treated water tank 29, the valves 25 and 27 are closed, direct current power source is flowed from the direct current power source device 17 again to the air-core coil 16, the valves 13 and 21 are opened and the magnetic separation is restarted.

Meanwhile, there is provided a bubble floating separation art as a conventional purification technology. In a continuous water purification apparatus for lake or reservoir to which the solid/liquid separation art is applied, as a pretreatment prior to a floating up and separating step, raw water to be subjected to water treatment is added with a flocculant, for example, polyaluminum sulfate or polyaluminum chloride after intaking the raw water and agitated. By the flocculant, suspended solids, phytoplanktons, fungi and microorganisms in the raw water are converted into flocks to constitute coagulators in a colloidal form. Thereafter, foamed water is injected and the coagulators are floated up by adhering very small air bubbles thereto and are separated from the raw water.

The floating separation apparatus is operated in the following manner.

Raw water in a reservoir is temporarily stored from a conducting tube into a raw water storing tank by a pump via a filter for taking large waste. The raw water is added with a flocculant of polyaluminum chloride or polyferric sulphate from a chemical adjusting device via a conducting pipe and is agitated by an agitator rotated by a motor in an agitating tank and an agitating action caused by a disturbance of flow produced by flowing in the raw water is utilized whereby pretreated water including flocks is produced. The pretreated water flows into a floatation separation vessel via a valve and via a conducting pipe. High pressure water dissolved with air from a pressurized water producing device is injected from a lower portion of the floatation separation vessel. The pressure of the high pressure water is reduced in the pressurized water producing device which is opened to the atmosphere and the dissolved air becomes very small air bubbles and floated up in the floatation separation vessel. At this occasion, the air bubbles adhere to the flocks and float up the flocks to water surface at a free interface. The floated flocks are recovered by a scraping recovering machine and is removed to separate from the raw water.

The recovered blocks are removed of the moisture as less as possible by a centrifugal separating machine or a sheet press pre-dryer, conveyed out after lowering the moisture content and dumped to a reclamation site or incinerated.

There is described a method in JP-A-6-511190 as a method of subjecting sewage waste solid or bottom mud of river, lake or ocean to oxidation treatment by high temperature and high pressure water. This is an oxidation process under super critical water. Object waste solid is waste solid including inorganic substance, organic substance and heavy metals which is subjected to oxidation treatment under super critical water of 350 °C or higher and 210 bar pressure or higher by mixing together an oxidation agent in a procedure of elevating temperature and elevating pressure of waste solid. In this case, inorganic solid substances after treatment are separated from a liquid by a difference between specific gravities of the solid substances and the treating liquid.

When phosphor present in animal or plant planktons in waste solid of river, lake or ocean or phosphor in waste solid can be recovered, it can be reused effectively in a fertilizer. However, according to the waste solid incinerating method, phosphor is mixed in the incinerated ash along with other inorganic substances and is difficult to separate from ash. Further, phosphor is present in a treating liquid as a phosphate in the oxidation treatment apparatus under super critical water.

In the case of recovering the ferromagnetic seeds by mechanical agitation to thereby destructing the magnetic flocks after separating the magnetic flocks by magnetic separation or in the case of recycled ferromagnetic seeds produced by recovering the ferromagnetic seeds from incineration ash by an electromagnetic separator, in the incinerating operation, the ferromagnetic seeds, for example, magnetite is oxidated at high temperatures and changed into hematite, the magnetic susceptibility is deteriorated or pieces of the coagulants are adhered to the recycled ferromagnetic seeds.

When the recovered ferromagnetic seeds are reused, particles of waste solid return to the raw water, resulting in an increase in the concentration of waste solid of raw water to be treated. Further, when the ferromagnetic seeds adhered with the pieces of coagulants are reused, the coagulating function is deteriorated. When the ferromagnetic seeds having the deteriorated magnetic susceptibility are reused, the magnetic separation function is lowered. Accordingly, there poses a problem in which an amount of chemicals used is increased and the operational cost is increased.

Further, when the ferromagnetic seeds are recovered from mechanically agitated waste solid by an electromagnetic separator using a magnet, fine pieces of the ferromagnetic seeds are mixed in the waste solid, these are difficult to recover by the electromagnetic separator and accordingly, the recovery rate is lowered.

A location of dumping or incinerating waste solid at a reclamation site is frequently remote from a location of causing or forming waste solid and in order to transport the waste solid, the moisture content of the waste solid must be reduced and water must be prevented from leaking from a transportation vehicle and the waste solid is transported after being dehydrated by a centrifugal separator or a sheet press pre-dryer. In this case, there poses a problem in which an amount of waste solid is further increased by an amount of an added high molecular flocculant by adopting the treatment process in which the high molecular flocculant is further added to the waste solid and dehydration rate is promoted. Further, there poses a problem of an increase in the cost of transporting the waste solid where the waste solid must temporarily be stocked until date of transportation and when waste solid including a large amount of water-bloom which is a plankton including a large amount of protein is stocked, there poses a problem in which the waste solid is decomposed during the storage and offensive odor is emitted.

It is the object of the invention to provide a waste solid treatment apparatus of the generic kind which allows excellent recovering of used ferromagnetic seeds and reusing treated solid waste components.

This object is achieved with the apparatus for treating a waste solid of claim 1 and with its embodiments according to subclaims 2 to 5.

According to a first aspect of the invention, in an apparatus of treating waste solid from a purification apparatus for providing a magnetism to substances to be removed in a fluid to be treated and magnetically separating the substances to be removed from the fluid to be treated in a space of a magnetic filed, the waste solid treatment apparatus comprising means for producing high temperature and high pressure waste solid in a subcritical state, magnetic separation means for separating the magnetic substances from the waste solid of high temperature and high pressure obtaining a waste solid free of magnetic substances but including solid waste components, and means for separating the solid waste components from the waste solid free of magnetic substances by pressure reducing means and additional heating means.

Further, it is conceivable to provide the magnetism to the substances to be removed in the fluid to be treated by adding an additive for producing ferromagnetic seeds by a chemical reaction between the ferromagnetic seeds and a flocculant or the substances to be removed to the fluid to be treated.

The magnetic separating means for removing to separate the ferromagnetic seeds or magnetic substances from the waste solid at a high temperature and a high pressure may be constituted by a magnetic separator in a plurality of stages having different magnetic forces such that the magnetic substances having different magnetic susceptibilities can be separated to classify by differences in the magnetic susceptibilities by utilizing the differences in the magnetic susceptibilities.

According to a third aspect of the invention, in a waste solid treatment apparatus for treating waste solid in which articles to be removed are condensed by adding a flocculant of an inorganic or organic-base to raw water including substances to be removed and separating to remove the substances to be removed, the waste solid treatment apparatus comprising means for subjecting the waste solid to a decomposition treatment by high temperature and high pressure treating means and magnetizing metal compounds in the waste solid after having been subjected to the decomposition treatment by a chemical reaction, separation treatment means for selectively separating and removing the magnetized metal compounds in the waste solid, and means for drying the waste solid free of magnetic substances at a high temperature and a high pressure by heating it under a reduced pressure.

Further, in the above-described constitution, the temperature may be controlled to be a temperature from substantially about 200 °C to less than 350 °C and the pressure may be maintained to be about 2 MPa or 2 MPa or less by the high temperature and high pressure water producing means.

A flocculant of an inorganic or organic-base is used. The coagulating action of the flocculant is broken in the high temperature and high pressure water, solid matters in flocks are disintegrated, the flocculant is stripped off the surrounding of ferromagnetic seeds in the waste solid and single bodies of the ferromagnetic seeds are separated. At this occasion, when waste solid is agitated, the function of separating the ferromagnetic seeds is further promoted. The temperature at this occasion is controlled to a temperature less than 350 °C to prevent the ferromagnetic seeds from being oxidized and preferably, the pressure is maintained at about 2 MPa or slightly higher than saturation pressure equal to or lower than 2 MPa substantially around 200 °C such that water is brought into a subcritical state. The separated ferromagnetic seeds are removed to separate from a subcritical solution (high temperature and high pressure waste solid) or high temperature and high pressure waste solid near to a subcritical solution. Components having weak magnetism of heavy metals in the high temperature and high pressure waste solid removed of the ferromagnetic seeds is treated to increase an absolute value of the magnetic susceptibility by a chemical reaction of oxidation or eutectic bonding. The reason is that a diamagnetic substance can also be magnetically separated. That is, an oxidizer of an iron compound, an alkaline agent, air or oxygen is supplied from a chemical tank and is subjected to a chemical reaction with the weak magnetism components of heavy metals. Solid matters formed by the reaction including the heavy metals produced by the chemical reaction can be separated to remove from the waste solid solution by magnetic separation or specific gravity separating means.

In respect of remaining liquid waste solid, the moisture is evaporated by, for example, spraying into the atmospheric pressure under reduced pressure and heating treatment and other molecular substances become solid matters having very small moisture content and are collected by specific gravity separation, centrifugal separation or filtering separation. Accordingly, the volume of the waste solid is reduced to the volume of the solid matters and organic substance components can be subjected to compost treatment.

According to the invention, by the above-described treatments, the ferromagnetic seeds having no impurities can be reused by recovering it by substantially 100 % and a reduction in the cost of using the ferromagnetic seeds can be achieved. Further, by combining with a purification apparatus of fluid to be treated by magnetic separation, the operation cost of the magnetic separation device can significantly be reduced and the waste solid disposal cost can significantly be reduced by reduced volume formation of the waste solid.

Further, heavy metal ions included in the waste solid can be removed by eutectic formation and accordingly, there is achieved an effect in which contamination is not resulted from the dumped waste solid.

Further, by subjecting the waste solid to decomposition treatment by the high temperature and high pressure treating means and installing means for magnetizing metal compounds in the waste solid after having been subjected to the decomposition treatment and the separation treatment means for selectively separating and removing the magnetized metal compounds in the waste solid, metal oxides can be separated to remove and heavy metal components can be removed from the waste solid to be dumped.

When the above-described oxidation treatment is carried out in a vessel separated from the atmosphere, offensive odor can be prevented from diffusing to outside.

Further, a large amount of phosphor component remains in solid waste after the above-described treatment and waste optimal to compost treatment can be obtained. The invention is further described referring to the accompanying drawings.
Fig. 1 is a view for explaining an embodiment of the invention and is a flow diagram for explaining a purification apparatus including a waste solid treatment apparatus.
Figs. 2A, 2B, 2C and 2D are views for explaining a decomposed state of waste solid.
Fig. 3 is a flow diagram for explaining other embodiment of the invention.
Fig. 4 is a diagram for explaining a basic flow of a conventional purification apparatus.

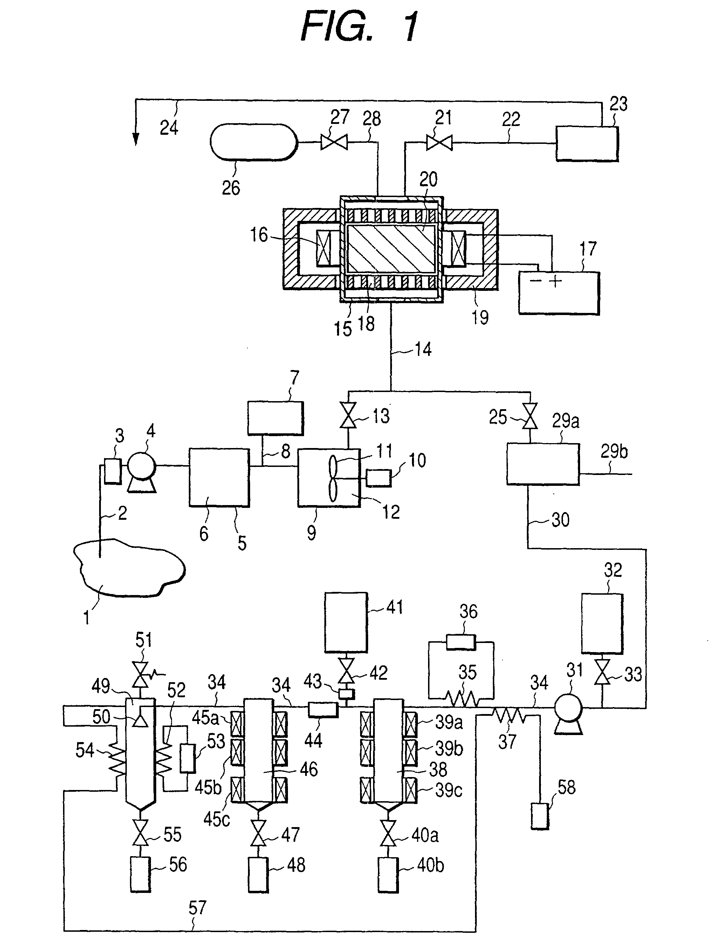

An explanation will be given of a basic flow of an operational procedure of a magnetic separation apparatus according to an embodiment of the invention in reference to Fig. 1 as follows.

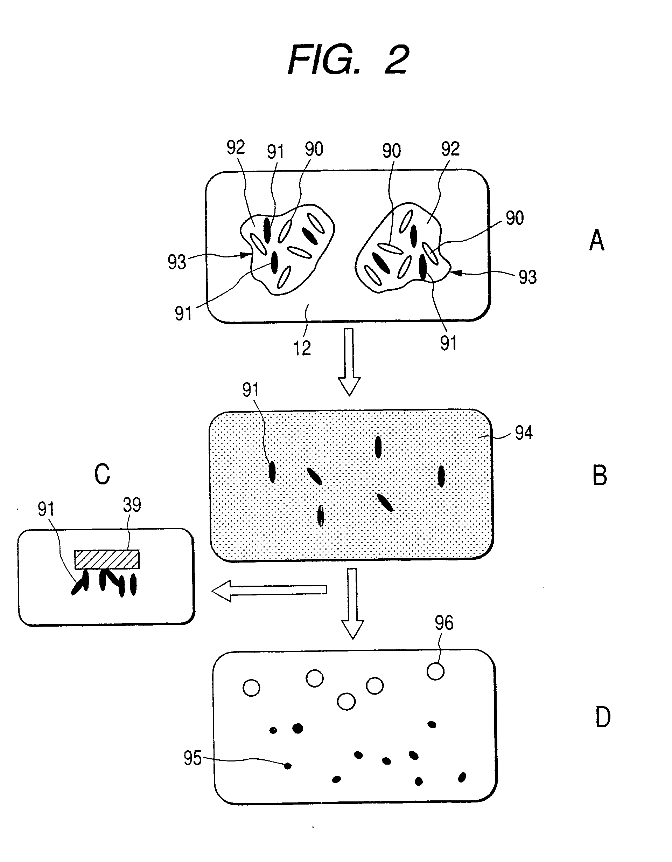

Raw water of a reservoir 1 is temporarily stored from a conducting tube 2 into a raw water storing tank 5 by a pump 4 via a filter 3 for taking large waste. Raw water 6 is added with ferromagnetic seeds of triiron tetroxide and a flocculant of polyaluminum chloride from a chemical adjusting device 7 via a conducting pipe 8 and agitated by an agitator 11 rotated by a motor 10 in an agitating tank 9 to thereby produce pretreated water 12 including magnetic substances of magnetic flocks produced by agitation. In this case, as shown by Fig. 2A, solid matters 90 of phytoplanktons in the raw water 6 are converted into magnetic flocks 93 in a colloidal form by a coagulating action of a flocculant 92 along with ferromagnetic seeds 91 to thereby constitute the treated water 12. The treated water 12 flows into a magnetic separation vessel 15 via a valve 13 and via a conducting tube 14.

Direct current power source is flowed from a direct current power source device 17 to an air-core coil 16. A magnetic field in proportion to the direct current is generated in the magnetic separation vessel 15 in a cylindrical shape and the magnetic field is made uniform by a porous magnetic pole 18 for conducting water. The magnetic field is surrounded by a yoke 19 made of iron and the yoke 19 prevents leakage as a passage of magnetic force lines. A magnetic filters matrix in a matrix of a high gradient magnetic filter 20 is magnetized by the magnetic field which has been made uniform. A disturbance is caused in the magnetic field in the magnetic separation vessel 15 by the magnetized magnetic filters matrix, coarse and dense portions of magnetic fluxes are produced locally and a number of portions constituting high magnetic gradient are caused. When the pretreated water 12 including the magnetic flocks 93 is delivered from a lower portion in an upward flow, the magnetic flocks in the raw water are caught on surfaces of the magnetic filters of the charged article by large magnetic force, the purified raw water is temporarily stored in a treated water tank 23 via a valve 21 and a conducting tube 22 and is returned to the reservoir 1 via a conducting tube 24.

After a predetermined amount of the magnetic flocks have been caught by the high gradient magnetic filter 20, backwashing of the filter is carried out to recover the function of magnetic separation. In the backwashing operation, firstly, the valve 13 is closed and delivery of the pretreated water 12 is stopped. Next, direct current power source is cut, the magnetic field is nullified, thereafter, a predetermined amount of the treated water is flowed back from an upper portion of the high gradient magnetic filter 20 via the valve 21 and a valve 25 is opened. Further, at this occasion, air is supplied from an air tank 26 via a valve 27 and a conducting pipe 28, the magnetic flocks adhered to surfaces of the magnetic filters are washed to remove while carrying out air bubbling, wash water is stored in a backwater treatment device 29a and is subjected to a dehydration treatment by a centrifugal separator. The treated water is returned to the reservoir 1 from a pipe 29b. A concentration of including the magnetic flocks is increased in the washed and dehydrated waste solid which has been washed to remove of the magnetic flocks as shown by Fig. 2A.

Waste solid is carried out from a bottom portion of the backwash-treated water tank 29a and is introduced into a slurry pressurizing pump 31 via a pipe 30. At an inlet portion of the slurry pressurizing pump 31, an alkaline solution of water, a reaction accelerating agent and a neutralizer necessary for treating by high temperature and high pressure water is added from a chemical tank 32 to the waste solid via a valve 33.

The waste solid the pressure of which is increased to about 2 MPa by the slurry pressurizing pump 31 is delivered into a reaction tube 34 and water heated to about 20 °C by a heater 35 heated by a power source 36 and an extra heat exchanger 37 utilizing recovery heat after waste solid treatment, is brought into a subcritical state.

Plant or animal plankton in waste solid is an organic substance and the flocculant is of an inorganic and organic-base. Therefore, as shown by Fig. 2B, bonding of coagulated flocks and magnetic flocks is destructed in subcritical water, solid matters in the flocks are disintegrated and the organic substances become a subcritical solution 94 mixed with oily and highly viscous liquid and moisture. The flocculant is stripped off the surrounding of the ferromagnetic seeds 91 in waste solid and single bodies of the ferromagnetic seeds are separated. Therefore, in ferromagnetic seeds separator shown by Fig. 1, separation of the ferromagnetic seeds is accelerated by agitating means (not illustrated) and as shown by Fig. 2C, in respect of the ferromagnetic seeds 91, the ferromagnetic seeds are guided in a direction of an end portion of a separator 38 and are collected at an end portion of a vessel by using magnetism generating means 39, for example, electromagnets 39a, 39b and 39c and switching power sources of the respective electromagnets. When the ferromagnetic seeds are piled up, the power sources of the electromagnets are cut or the electromagnetic force is reduced by reducing conducting current, a valve 40a is opened and slurry of the ferromagnetic seeds is recovered to a recovery tank 40b by utilizing the inner pressure. The recovered ferromagnetic seeds are reused for magnetic separation.

After waste solid comes out from the ferromagnetic seeds separator 38, the waste solid in the reaction tube 34 is added with oxygen, hydrogen peroxide, air, an eutectic reaction agent, an acidic or an alkaline solution necessary for subjecting the waste solid free of the ferromagnetic seeds to an oxidation treatment in high temperature and high pressure water from a chemical tank 41 via a valve 42 and a pump 43. As shown by Fig. 2D, in respect of waste solid free of the ferromagnetic seeds the temperature of which is controlled by a temperature adjuster 44, heavy metal ions included in waste solid which is free of the ferromagnetic seeds in the reaction tube 34 are converted into an eutectic with an iron compound 95 and becomes heavy metal oxide molecules 96 and the magnetic susceptibility of heavy metal compounds is increased. Further, phosphor present in waste solid free of the ferromagnetic seeds becomes a phosphate by chemical reaction and converted into solid matters.

Next, the iron compounds 95 and the heavy metal oxide molecules 96 are guided in a direction of an end portion of a magnetic article separator 46 by switching power sources of electromagnets 45a, 45b and 45c and are collected at an end portion of a vessel. A high gradient magnetic filter may be arranged in the magnetic article separator 46 by which collecting capacity is enhanced. When the ferromagnetic seeds are piled up, the power sources of the electromagnets are cut or the electromagnetic force is reduced by reducing conducting current, a valve 47 is opened and slurry of heavy metals is recovered to a recovering tank 48 by utilizing the inner pressure.

Thereafter, a waste solid solution at a high temperature and a high pressure is subjected to pressure reduction and sprayed from a nozzle 50 into a flush tank 49. The inside of the flush tank 49 is adjusted to pressure slightly higher than the atmospheric pressure by a pressure adjusting valve 51 in the flush tank 49. A portion of the moisture of the waste solid solution at the high temperature and the high pressure is spontaneously evaporated by an inner heat capacity and a remaining portion is evaporated by being heated by a heater 52 heated by a power source 53. The vapor preserves temperature of a wall of the flush tank 49 by a heat exchanger 54 and the vapor is prevented from condensing in the flush tank 49. Organic substances or inorganic molecules in the waste solid solustion are dried and solidified in the flush tank 49, dried articles are precipitated to separate at a bottom portion of a vessel and are collected to a waste solid recovery vessel 56 via a valve 55. By these treatments, solid components of waste solid are considerably reduced and a volume thereof is significantly reduced.

The vapor passes through a pipe 57 subjected to heat recovery at the extra heat exchanger 37, becomes condensed water at a condensing cooler 58 and is returned to the reservoir 1. At this occasion, chemicals are injected into the condensed water to thereby carry out neutralization treatment in order to make pH of the condensed water further neutral. Further, an amount of heating of the heater 52 can also be reduced by adjusting pressure in the condensing cooler 58 at lower than the atmospheric pressure and bringing pressure in the flush tank 49 under the atmospheric pressure to thereby increase a spontaneous evaporation amount.

According to the embodiment, coagulating action of the flocculant is broken in the high temperature and high pressure water, solid articles in the flocks are disintegrated, the flocculant is stripped off the surrounding of the ferromagnetic seeds in the waste solid and single bodies of the ferromagnetic seeds can be separated and accordingly, the ferromagnetic seeds having a high purity can be recovered when it is reused. The volume of waste solid can be reduced and the cost of waste solid treatment can also be reduced.

Further, by combining with the magnetic separating apparatus, a reduction in the cost of using the ferromagnetic seeds is achieved and the operating cost can considerably be reduced.

Further, heavy metals in solid waste can be removed and accordingly, waste solid having the reduced volume can be reused as a fertilizer of an organic fertilizer or an inorganic fertilizer.

Further, even when the waste solid treating apparatus which is removed of the apparatus of recovering the ferromagnetic seeds of the backwash water treating device 29a and devices thereafter, is applied to waste solid which is brought about by other purification apparatus such as a floatation separation apparatus using a flocculant of polyaluminum chloride or polyferric sulphate, an effect other than the effect of recovering and reusing the ferromagnetic seeds is similarly achieved. In this case, aluminum in the flocculant can be removed from the waste solid treatment water as a metal oxide and therefore, waste solid treatment removed of aluminum can be carried out.

Further, even when the moisture content of waste solid brought about from a purification apparatus is larger than 85 % whereby the waste solid cannot be generally transported by a truck since the moisture content is excessively large, the high temperature and high pressure treatment can be carried out and accordingly, the waste solid can be subjected to drying treatment. Therefore, as dehydrating means of the backwash-water treating apparatus 29a, a centrifugal dehydrating device at a low rotational number or a small sized belt-pressurized dehydrating device can be used which achieves an effect capable of reducing the device cost.

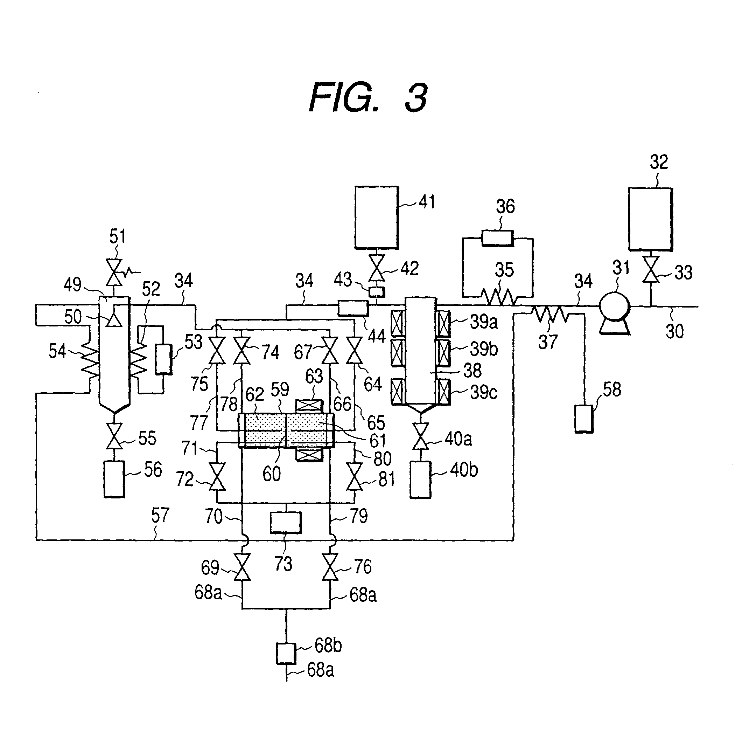

Fig. 3 shows other embodiment of the invention. Fig. 3 is a diagram showing only a unit of treating backwash waste solid and a point of the embodiment which differs from the constitution of Fig. 1 resides in that a high gradient magnetic separator 59 using a magnetic filter having large magnetic suction force is arranged as means for magnetically separating the iron compounds 95 and the heavy metal oxide molecules 96 having the small magnetic susceptibility in waste solid the temperature of which is controlled by the temperature adjuster 44 (refer to Fig. 2D).

Magnetic filters 61 and 62 are arranged in chambers at left and right portions of the drawing partitioned by a partition wall 60 in the high gradient magnetic separator 59, a magnet 63 in a cylindrical shape is installed at outer peripheral portions of the magnetic filters and a magnetic field is generated in a space where the magnetic filters are arranged. The magnet 63 is moved alternately at the outer peripheral portions of the magnetic filters 61 and 62 and the magnetic filters 61 and 62 are present in spaces at inside of the magnetic field and at outside of the magnetic field.

Waste solid the temperature of which is controlled by the temperature adjuster 44 is introduced into an inner portion of the magnetic filter 61 via a valve 64 and a pipe 65. High magnetic gradient is caused on the filter surface of the magnetic filter 61 by the magnetic field generated by the magnet 63, the iron compounds 95 and the heavy metal oxide molecules 96 having the small magnetic susceptibility in the waste solid are caught by the magnetic force and waste solid free of the removed iron components 95 and the heavy metal oxide molecules 96 having the small magnetic susceptibility, is introduced into the flush tank 49 via the reaction tube 34 after passing through a pipe 66 and a valve 67.

Meanwhile, the iron components 95 and the metal oxide molecules 96 drawn by the magnetic filter 62 before the step are outside of the magnetic field and accordingly, treated water is conducted by a conducting pipe 68a and a pressurizing device 68b both connected to the treated water tank 23, washes the surface of the magnetic filter via a valve 69 and a conducting pipe 70 and passes through a pipe 71 and a valve 72 and treated water including the iron compounds 95 and the metal oxide molecules 96 is stored in a wash tank 73. In this case, valves 74, 75 and 76 are closed.

After a predetermined amount of the magnetic articles are caught by and piled up on the magnetic filter 61, the magnet 63 is moved in the left direction of the drawing to thereby place the magnetic filter 61 at outside of the magnetic field and place the magnetic filter 62 at inside of the magnetic field. Waste solid the temperature of which is controlled by the temperature adjuster 44 is introduced into an inner portion of the magnetic filter 62 after passing through the valve 75 and a pipe 77. High magnetic gradient is caused on the filter surface of the magnetic filter 62 by the magnetic field generated by the magnet 63, the iron compounds 95 and the heavy metal oxide molecules 96 having the small magnetic susceptibility in waste solid are caught by the. magnetic force and waste solid free of the removed iron compound 95 and the heavy metal oxide molecule 96 having the small magnetic susceptibility is introduced into the flush tank 49 via the reaction tube 34 after passing through a pipe 78 and the valve 74.

Meanwhile, the iron compounds 95 and the metal oxide molecules 96 both drawn to the magnetic filter 61 before the step are present at outside of the magnetic field and accordingly, treated water is introduced into the separator 59 by a pipe 68a and a pressurizing device 68b and washes the surface of the magnetic filter after passing through the valve 76 and a conducting pipe 79 and the iron compounds 95 and the heavy metal oxide molecules 96 are stored in the wash tank 73 via a pipe 80 and a valve 81. At this occasion, valves 64, 67 and 69 are closed.

In this way, the iron compounds 95 and the metal oxide molecules 96 are continuously removed from the waste solid. The heavy metals in the wash tank 73 is separately subjected to solution-treatment at high temperatures and subjected to waste treatment such that the heavy metals are not dissolved off.

According to the embodiment, the high gradient magnetic separator 59 is used at the heavy metal removing unit and accordingly, there is achieved an effect of capable of removing to separate particles of heavy metals having a small magnetic susceptibility.

Although according to the above-described embodiments, a description has been given of an apparatus of purifying waste solid caused by animal plankton or plant plankton, in respect of treated water, the apparatus can also be used for purifying waste solid which is brought about from sea water, river water, lake water, industrial waste water, rain water and waste water from a refuse disposal site, sewage- or wash water for exhaust gas, contaminated soil or the like including organic or inorganic substances, heavy metal substances or chemical substances.

Further, a similar effect is achieved in the case in which the moisture content of waste solid in the flush tank is high, when recovery of ferromagnetic seeds or magnetic substance is carried out in the process line of the flush tank 49 and later steps and thereafter, the waste solid without the removed substances is heated and dried.

## Claims

1. Apparatus for treating a waste solid which exits from a purification device and which includes magnetic flocks (93) consisting of magnetic substances (91) and solid waste components, wherein the apparatus comprises means (35, 37, 52) for heating the waste solid to a high temperature, **characterized by**
- means (31) for pressurizing the waste solid to a high pressure such that the waste solid of high pressure and high temperature is in a subcritical state,
- magnetic separation means (38, 46, 59) for separating the magnetic substances (91, 95, 96) from the waste solid of high pressure and high temperature obtaining a waste solid free of magnetic substances but including the solid waste components, and
- means (49) for separating the solid waste components from the waste solid free of magnetic substances by pressure reduction means (51) and additional heating means (52).

2. Apparatus according to Claim 1, **characterized in that** the magnetic separation means (38, 46, 59) comprise magnetic separators (38, 46, 59) arranged in stages having different magnetic forces such that the magnetic substances (91, 95, 96) having different magnetic susceptibilities can be separated by classification according to their differences in their magnetic susceptibilities.

3. Apparatus according to Claim 1 or 2, **characterized in**
- **that** the means (35, 37, 52) for heating said waste solid to high temperature comprises a temperature control (44) to maintain the temperature in a range from substantially about 200°C to less than 350°C and
- **that** the means (31) for pressurizing said waste solid to a high pressure comprises a pressure control to maintain the pressure about 2 MPa or lower than 2 MPa and higher than the respective saturation pressure of the waste solid.

4. Apparatus according to any one of Claims 1 to 3, **characterized by** means (34, 41, 42, 43) for adding chemicals to the waste solid of high pressure and high temperature to react with the components of the waste solid having weak magnetism to increase their susceptibility for enhancing their magnetic separation.

5. Apparatus according to any one of Claims 1 to 4, **characterized by** means (40a, 40b, 47, 48, 72, 73, 81) for removing said magnetic substances (91, 95, 96) after their separation from the solid waste components.

## Patentansprüche

1. Vorrichtung zum Behandeln von Abfallfeststoff, der aus einer Reinigungsvorrichtung austritt und magnetische Flocken (93) aufweist, die aus magnetischen Substanzen (91) und Feststoffabfallkomponenten bestehen, wobei die Vorrichtung Einrichtungen (35, 37, 52) zum Erhitzen des Abfallfeststoffs auf eine hohe Temperatur aufweist, **gekennzeichnet durch**
- Einrichtungen (31) zum Bringen des Abfallfeststoffs auf einen hohen Druck derart, dass der Abfallfeststoff mit hohem Druck und hoher Temperatur sich in einem subkritischen Zustand befindet,
- magnetische Trenneinrichtungen (38, 46, 59) zum Abtrennen der magnetischen Substanzen (91, 95, 96) aus dem Abfallfeststoff mit hohem Druck und hoher Temperatur, wobei ein Abfallfeststoff erhalten wird, der frei von magnetischen Substanzen ist, aber noch die Feststoffabfallkomponenten aufweist, und
- Einrichtungen (49) zum Trennen der Feststoffabfallkomponenten aus dem Abfallfeststoff, der frei von magnetischen Substanzen ist, **durch** Druckreduziereinrichtungen (51) und zusätzliche Heizeinrichtungen (52).

2. Vorrichtung nach Anspruch 1, **dadurch gekennzeichnet, dass** die magnetischen Trenneinrichtungen (38, 46, 59) magnetische Separatoren (38, 46, 59) aufweisen, die in Stufen mit unterschiedlichen magnetischen Kräften angeordnet sind, so dass die magnetischen Substanzen (91, 95, 96) mit unterschiedlichen magnetischen Suszeptibilitäten durch Klassierung entsprechend ihren Unterschieden in ihren magnetischen Suszeptibilitäten getrennt werden können.

3. Vorrichtung nach Anspruch 1 oder 2, **dadurch gekennzeichnet,**
- **dass** die Einrichtungen (35, 37, 52) zum Erhitzen des Abfallfeststoffs auf hohe Temperatur eine Temperatursteuerung (44) aufweisen, um die Temperatur in einem Bereich von im wesentlichen etwa 200°C bis weniger als 350°C zu halten, und
- **dass** die Einrichtungen (31) zum Bringen des Abfallfeststoffs auf einen hohen Druck eine Drucksteuerung aufweisen, um den Druck auf etwa 2 MPa oder weniger als 2 MPa und höher als der entsprechende Sättigungsdruck des Abfallfeststoffs zu halten.

4. Vorrichtung nach einem der Ansprüche 1 bis 3, **gekennzeichnet durch** Einrichtungen (34, 41, 42, 43) zur Zugabe von Chemikalien zu dem Abfallfeststoff mit hohem Druck und hoher Temperatur für eine Reaktion mit den Komponenten des Abfallfeststoffs, die einen schwachen Magnetismus haben, um ihre Suszeptibilität zur Verbesserung ihrer magnetischen Trennung zu erhöhen.

5. Vorrichtung nach einem der Ansprüche 1 bis 4, **gekennzeichnet durch** Einrichtungen (40a, 40b, 47, 48, 72, 73, 81) zum Entfernen der magnetischen Substanzen (91, 95, 96) nach ihrer Abtrennung von den Feststoffabfallkomponenten.

## Revendications

1. Installation pour traiter des déchets solides sortant d'un dispositif d'épuration et contenant des flocs magnétiques (93) constitués par des substances magnétiques (91) et une fraction de déchets solides, l'installation comportant des moyens (35, 37, 52) pour porter les déchets solides à une température élevée, **caractérisée par**
- un moyen (31) pour mettre sous une haute pression les déchets solides de façon que les déchets solides sous haute pression et à température élevée soient dans un état sous-critique,
- des moyens de séparation magnétique (38, 46, 59) pour séparer les substances magnétiques (91, 95, 96) des déchets solides sous haute pression et à température élevée en obtenant des déchets solides exempts de substances magnétiques mais contenant la fraction de déchets solides, et
- un moyen (49) pour séparer la fraction de déchets solides des déchets solides exempts de substances magnétiques à l'aide d'un moyen de réduction de pression (51) et d'un moyen de chauffage supplémentaire (52).

2. Installation selon la revendication 1, **caractérisée en ce que** les moyens de séparation magnétique (38, 46, 59) comprennent des séparateurs magnétiques (38, 46, 59) disposés en étages à forces magnétiques différentes de façon que les substances magnétiques (91, 95, 96) à susceptibilités magnétiques différentes puissent être séparées par classification en fonction de leurs différences de susceptibilité magnétique.

3. Installation selon la revendication 1 ou 2, **caractérisée en ce que**
- les moyens (35, 37, 52) pour chauffer lesdits déchets solides à une température élevée comportent un régulateur (44) de température pour maintenir la température sensiblement entre environ 200°C et moins de 350°C, et
- le moyen (31) pour mettre sous haute pression lesdits déchets solides comporte un régulateur de pression pour maintenir la pression à environ 2 MPa ou moins de 2 MPa et au-dessus de la pression de saturation respective des déchets solides.

4. Installation selon l'une quelconque des revendications 1 à 3, **caractérisée par** des moyens (34, 41, 42, 43) pour ajouter des produits chimiques dans les déchets solides sous haute pression et à température élevée pour qu'ils réagissent avec les constituants à faible magnétisme des déchets solides afin d'accroître leur susceptibilité dans le but d'accentuer leur séparation magnétique.

5. Installation selon l'une quelconque des revendications 1 à 4, **caractérisée par** des moyens (40a, 40b, 47, 48, 72, 73, 81) pour extraire lesdites substances magnétiques (91, 95, 96) après leur séparation d'avec la fraction de déchets solides.
